# EUROPÄISCHE PATENTSCHRIFT

(11) **EP 1 781 446 B1**
(45) Veröffentlichungstag und Bekanntmachung des Hinweises auf die Patenterteilung: **02.12.2009**
(21) Anmeldenummer: 05744017.4
(22) Anmeldetag: 05.04.2005
(51) Int. Cl.: B23K 31/12, G01N 29/26

(54) **VORRICHTUNG ZUM ULTRASCHALL-PRÜFEN DER SCHWEIßNAHT LÄNGSNAHTGESCHWEIßTER ROHRE AUF LÄNGSFEHLER**
DEVICE FOR THE ULTRASONIC INSPECTION OF THE WELD SEAM OF LONGITUDINALLY WELDED PIPES FOR DEFECTS
DISPOSITIF POUR CONTROLER PAR ULTRASONS LA PRESENCE DE DEFAUTS LONGITUDINAUX SUR LE CORDON DE SOUDURE DE TUBES A SOUDURE LONGITUDINALE

(30) Priorität: 27.08.2004 DE 102004042303
(43) Veröffentlichungstag der Anmeldung: 09.05.2007
(73) Patentinhaber: MANNESMANN FUCHS ROHR GMBH, 57074 Siegen (DE)
(72) Erfinder: RATH, Hans-Joachim, 59071 HAMM (DE); LÜCKE, Rainer, 48161 MÜNSTER (DE); GRAFF, Alfred, 45239 ESSEN (DE)
(74) Vertreter: Meissner, Peter E.
(86) Internationale Anmeldenummer: PCT/DE2005/000645
(87) Internationale Veröffentlichungsnummer: WO 2006/021167

(56) Entgegenhaltungen:
- DE-A1- 2 854 374
- US-A- 3 868 847
- US-A- 4 195 530
- US-A- 5 583 292
- US-A- 5 677 490
- US-A1- 2004 020 298

## Beschreibung

Die Erfindung betrifft eine Vorrichtung zum Ultraschall-Prüfen der Schweißnaht längsnahtgeschweißter Rohre auf Längsfehler gemäß dem Oberbegriff des Patentanspruches 1.

Eine Vorrichtung zum Ultraschall-Prüfen von Rundschweißnähten an Rohren auf Längs- und Querfehler ist von Scott Lebsack und Helmut Heckhauser in der Zeitschrift "Materials Evaluation" (August 1995, Seiten 886 - 891) veröffentlicht mit dem Titel "Immersion Probe Arrays for Rapid Pipeline Weld Inspection". Diese Vorrichtung weist ein Haltesystem auf, in dem zwei Prüfkopfsysteme (Arrays) befestigt sind. Jedes Prüfkopfsystem weist vier Prüfköpfe für die Längsfehlerprüfung und einen Prüfkopf für die Querfehlerprüfung auf. Die zwei Prüfkopfsysteme für die Längsfehlerprüfung sind rechts und links neben der Rundschweißnaht positioniert, wobei jeder Prüfkopf zugleich als Sender und Empfänger fungiert, der einen bestimmten Bereich der Naht in Dickenrichtung erfasst.

Nachteil bei dieser bekannten Vorrichtung für die Rundnahtprüfung ist, dass sie für die Längsfehlerprüfung an Rohrlängsnähten nicht geeignet ist, da eine Anpassung der Prüfkopfhalterung an die Rohrkrümmung bei Anordnung in Rohrumfangsrichtung nicht vorgesehen ist.

Durch die Art der Prüfung mit einem gleichzeitig als Sender und Empfänger fungierenden Prüfkopf können zudem nicht alle Fehler in der Nahtmitte sicher erkannt werden. Gerade bei der in Prüfvorschriften häufig geforderten 45° Prüftechnik, bei der ein Einschallwinkel von 45° bezogen auf die Rohroberfläche vorgeschrieben ist, werden bei größeren Wanddicken, z. B. > 12,0 mm, Längsfehler im Nahtmittenbereich durch diese Prüftechnik, wenn überhaupt, nur unzureichend detektiert.

In der DE 26 07 011 wird eine Vorrichtung zum Ultraschall-Prüfen der Schweißnaht von UPgeschweißten Großrohren offenbart, wobei in einem Prüfbereich zur Längsfehlerprüfung mindestens vier Ultraschall-Winkelprüfköpfe beidseitig der Schweißnaht und mit unterschiedlichem Abstand zu dieser angeordnet sind. Jeweils einem Prüfkopf auf der einen Nahtseite steht mit gleichem Abstand zur Naht auf der anderen Nahtseite ein weiterer Prüfkopf gegenüber. Jeder Prüfkopf fungiert ebenfalls gleichzeitig als Sender und Empfänger des Ultraschallsignals. Der Prüfbereich wird dabei durch die Hintereinanderanordnung der Prüfköpfe längs zur Schweißnaht bestimmt, wobei durch diese Hintereinanderanordnung der gesamte Nahtdickenbereich erfasst werden soll.

Diese Vorrichtung weist ebenfalls die zuvor beschriebenen Nachteile der Fehlererkennung im Nahtmittenbereich auf und hat zusätzlich den Nachteil, dass die Vorrichtung sehr aufwändig gestaltet ist und eine Anpassung an stark unterschiedliche Rohrdurchmesser nur sehr aufwändig zu realisieren ist.

Schließlich sei noch auf die DE 101 34 696 C1 verwiesen, in der ebenfalls eine Vorrichtung zum Ultraschall-Prüfen der Schweißnaht längsnahtgeschweißter Rohre, u. a. auf Längsfehler, offenbart wird. Auch diese Vorrichtung weist an jeder Nahtseite, sich gegenüberliegend, jeweils einen gleichzeitig als Sender und Empfänger fungierenden Prüfkopf auf, wobei durch die aufwändige Gestaltung der Vorrichtung und den Einsatz von Normal-Prüfköpfen eine flexible und schnelle Anpassung an unterschiedliche Prüfaufgaben und Rohrabmessungen schwierig ist.

Ebenfalls sich bezogen auf die Schweißnaht gegenüberliegende Prüfköpfe werden in der US - A-4 195 530 eingesetzt, wobei diese allerdings während der eigentlichen Prüfung sowohl als Sender wie auch als Empfänger arbeiten.

Aufgabe der Erfindung ist es, eine Vorrichtung zum Ultraschall-Prüfen der Schweißnaht längsnahtgeschweißter Rohre auf Längsfehler anzugeben, die eine bessere Fehlerdetektion auch im Nahtmittenbereich ermöglicht. Eine weitere Aufgabe soll darin bestehen, den Aufbau der Vorrichtung einfacher zu gestalten und damit eine flexible und schnelle Anpassung an unterschiedliche Prüfaufgaben und Rohrabmessungen zu ermöglichen.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist die Prüfeinheit mit zwei je nach Prüfaufgabe und Rohrgeometrie in ihrem Abstand zueinander veränderbaren Prüfköpfen in Tandemanordnung bestückt, wobei ein Prüfkopf als Sender und der andere Prüfkopf als Empfänger fungiert und die Position der Prüfköpfe in der Prüfeinheit relativ zur Rohroberfläche in der Weise anpassbar ist, dass diese unabhängig vom Rohrdurchmesser immer in der dem vorgesehen Einschallwinkel relativ zur Rohroberfläche entsprechenden Position anordenbar sind.

Bei den Prüfköpfe kann es sich insbesondere um Winkelprüfköpfe handeln.

Zum besseren Verständnis der erfindungsgemäßen Lösung wird im folgenden kurz die Funktionsweise eines Winkelprüfkopfes beschrieben.

Bei einem Winkelprüfkopf wird die Richtung der Schallausbreitung innerhalb des Prüfkopfes vorgegeben, so dass bei einer flächigen Ankopplung des Prüfkopfes auf der Rohroberfläche die Einschaltung in die Rohroberfläche in der innerhalb des Prüfkopfes vorgegebenen Richtung (beispielsweise 45°) erfolgt.

Normal-Prtifköpfe hingegen schallen bei flächiger Ankopplung immer senkrecht in die Rohroberfläche ein. Will man mit Normal-Prüfköpfen unter einem bestimmten Winkel in die Rohroberfläche einschalten, muss der Prüfkopf selbst in die dem vorgesehenen Einschallwinkel entsprechende Winkellage geschwenkt werden.

Durch die erfindungsgemäße Prüfeinheit werden die Prüfköpfe immer in einer solchen Lage in der Prüfeinheit angeordnet, dass jetzt unabhängig von der Krümmung bzw. vom Durchmesser des Rohres, eine flächige Ankopplung an der Rohroberfläche in der dem vorgesehen Einschallwinkel entsprechenden Soll-Position gewährleistet ist.

Durch diese Tandemanordnung der Prüfköpfe in der Vorrichtung können so in einfacher und effektiver Weise auch bei Anwendung der 45° Prüftechnik Längsfehler im Bereich der Nahtmitte sicher und mit ausreichender Empfindlichkeit erfasst werden.

Die vorgeschlagene Prüfeinheit hat weiterhin den Vorteil, dass in flexibler Anpassung an unterschiedliche Prüfaufgaben und Rohrgeometrien gleichzeitig ein Höchstmaß an reproduzierbaren Einstellungen gewährleistet wird.

Zur flexiblen und schnellen Anpassung an unterschiedliche Prüfaufgaben und Rohrgeometrienist die Prüfeinheit in vorteilhafter Weise aus standardisierten Baukastenelementen modular aufgebaut. Diese Module bestehen aus:
- einem Verbindungselement und zwei damit verbindbaren, die Prüfköpfe aufnehmenden separaten Aufnehmern, mit je einem Koppelmittelanschluss,
- zwei jeweils mit den Aufnehmern verbindbaren Längsschienen,
- einer mit der Prüfeinheit verbindbaren Anschlusskupplung zur ortsfesten Positionierung der Prüfeinheit in Prüfstellung an ein ortsfestes Führungsgestell,
wobei das Verbindungselement, die Winkellage und den Abstand der Prüfköpfe zueinander vorgebend, auswechselbar und entsprechend der Prüfaufgabe und Rohrgeomotrie in einem Vorzugsmaßraster für Winkellage und Abstand der Prüfköpfe sortiert und zusammengestellt ist.

Über die veränderbare Winkelstellung der Prüfköpfe im Verbindungselement wird auf einfache Weise die Anpassung der Prüfkopfpostion an unterschiedliche Rohrdurchmesser realisiert, wobei der Prüfkopf bezogen auf die Rohroberfläche in der Weise ausgerichtet ist, dass eine reproduzierbare Einschallung unter dem vorgegeben Einschallwinkel, von z. B. 45°, erfolgen kann.

In vorteilhafter Weise wird diese Anpassung an unterschiedliche Rohrdurchmesser nur noch über das auswechselbare Verbindungselement vorgenommen, wobei innenseitig an den längsseitigen Enden unter einer bestimmten Winkellage je eine Ausnehmung angebracht ist, in die die beiden Aufnehmer für die Prüfköpfe einsteckbar und fixierbar sind. Die Winkellage der Ausnehmungen ist dabei so an die unterschiedlichen Rohrdurchmesser angepasst, dass die Prüfköpfe mit dem vorgesehenen Einschallwinkel in die Rohroberfläche einschalten.

Über die vorgegebene Winkellage der Ausnehmung und die den Abstand der Prüfköpfe zueinander bestimmende Länge des Verbindungselementes kann nun in sehr einfacher und reproduzierbarer Weise die Anpassung an unterschiedliche Prüfaufgaben und Rohrgeometrien erfolgen. Die Fixierung der Aufnehmer am Verbindungselement erfolgt vorzugsweise mittels durch in die Aufnehmer steckbare und in das Verbindungselement drehbare Schrauben.

Der Aufnehmer selbst ist vorteilhaft zweiteilig, bestehend aus einer Grundplatte und einem damit verbindbaren Klemmelement, aufgebaut. Die Grundplatte ist mit einer kreisförmigen Ausnehmung versehen, die den Prüfkopf auf einem Teilumfang umfasst. Zur vollständigen Umfassung und Klemmung des Prüfkopfes in der Grundplatte weist das Klemmelement ebenfalls eine komplementäre Teilausnehmung auf, wobei die Klemmung vorteilhaft über eine Verschraubung des Klemmelementes mit der Grundplatte erfolgt.

Bei der eigentlichen Prüfung wird das längsnahtgeschweißte Rohr mit der Längsschweißnaht unter der feststehenden Prüfeinheit hindurchgefahren. Um eine gleichmäßige Kontaktierung der Prüfköpfe auf der Rohroberfläche während der Prüfung zu gewährleisten, wird die Prüfeinheit auf der Rohroberfläche geführt. Dazu sind die Schienenelemente der Prüfeinheit vorteilhafterweise als Gleitkufen ausgebildet, die auf der Rohroberfläche gleiten.

Um den durch die Reibung entstehenden Verschleiß zu minimieren, sind die Gleitkufen an den Kontaktflächen mit dem Rohr mit einem Verschleißschutz versehen, der aus einem Hartwerkstoff, beispielsweise Hartmetall oder Keramik bestehen kann.

Eine andere vorteilhafte Lösung besteht auch darin, zum Abrollen der Prüfeinheit auf der Rohroberfläche die Längsschienen mit verschleißarmem Rollen oder mit in alle Richtungen drehbaren verschleißarmen Kugeln zu versehen.

Um die Montage der zur Prüfung vorbereiteten Prüfeinheit an das ortsfeste Führungsgestell zu vereinfachen, ist die Prüfeinheit mit einer Anschlussschnellkupplung versehen. Die Anschlusskupplung ist quer zur Längsachse der Prüfeinheit schwenkbar an einem Lagerbock angeschlossen, der seinerseits zur Realisierung eines sicheren und festen Anschlusses der Anschlusskupplung an die Prüfeinheit, form- und kraftschlüssig mit dem Verbindungselement der Prüfeinheit verbunden ist. Hierbei wird die Formschlüssigkeit durch eine Nut im Verbindungselement und eine in die Nut greifende Nase des Lagerbockes der Anschlusskupplung erreicht. Zusätzlich wird diese Verbindung über eine Verschraubung kraftschlüssig gesichert.

Der mit der Prüfeinheit fest verbundene Lagerbock besitzt quer zur Längsachse eine Schwenkachse, um die sich die Anschlusskupplung in einem begrenzten Bereich schwenken kann. Diese Schwenkbarkeit erleichtert das exakte Positionieren der Prüfeinheit auf der Rohroberfläche. Die Voreinstellung wird dann in einfacher Weise durch Verklemmen der Anschlusskupplung mit dem Lagerbock über einen Spannhebel fixiert.

Zur Vereinfachung der Positionierung der Prüfeinheit auf der (gekrümmten) Rohroberfläche ist die Prüfeinheit ebenfalls in einem vorgegebenen Winkelbereich um die Längsachse drehbar an der Anschlusskupplung angeschlossen. Dazu ist die Anschlusskupplung mit einer mit dem ortsfesten Führungsgestell fest verbindbaren Anschlusshülse versehen, in der ein mit dem Lagerbock fest verbundener Zapfen in einem vorgegebenen Winkelbereich dreh- und in der jeweiligen Position feststellbar angeordnet ist.

Weitere Merkmale, Vorteile und Einzelheiten der Erfindung ergeben sich aus der nachfolgenden Beschreibung des dargestellten Ausführungsbeispiels:

Es zeigen:
- **Figur 1**: in einer Seiten- und Draufsicht eine erfindungsgemäß ausgebildete Prüfeinheit für die Längsfehlerprüfung,
- **Figur 2a**: in einem Querschnitt und einer Draufsicht ein Verbindungselement für die Prüfeinheit,
- **Figur 2b**: wie Figur 2a, jedoch für eine andere Rohrgeometrie oder Prüfaufgabe,
- **Figur 3**: in einer Seiten- und Draufsicht einen Aufnehmer für einen Prüfkopf,
- **Figur 4**: in einem Längs- und Querschnitt eine Längsschiene der Prüfeinheit,
- **Figur 5a**: Anordnung der Prüfeinheit auf einem Rohr mit kleinem Durchmesser,
- **Figur 5b**: wie Figur 5a, jedoch auf einem Rohr mit großem Durchmesser.

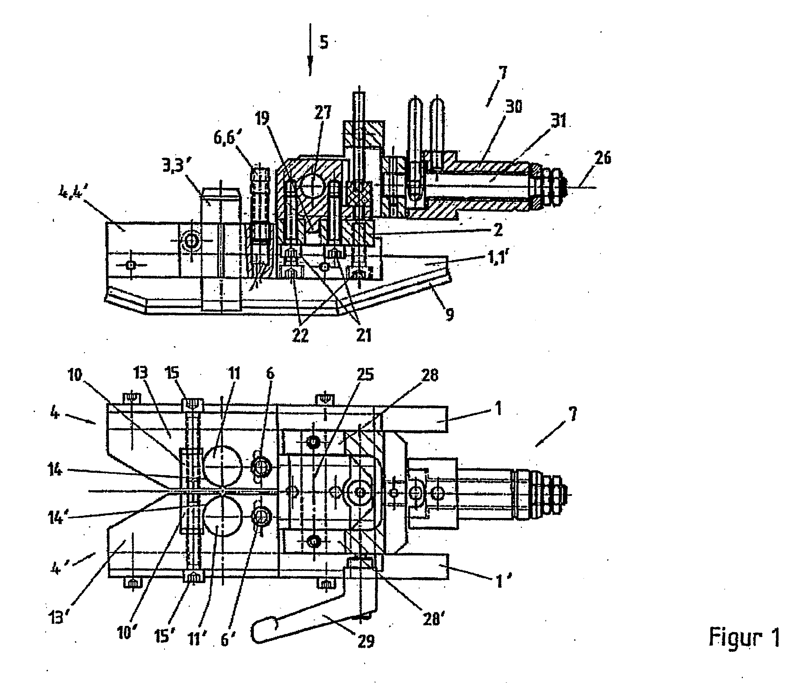

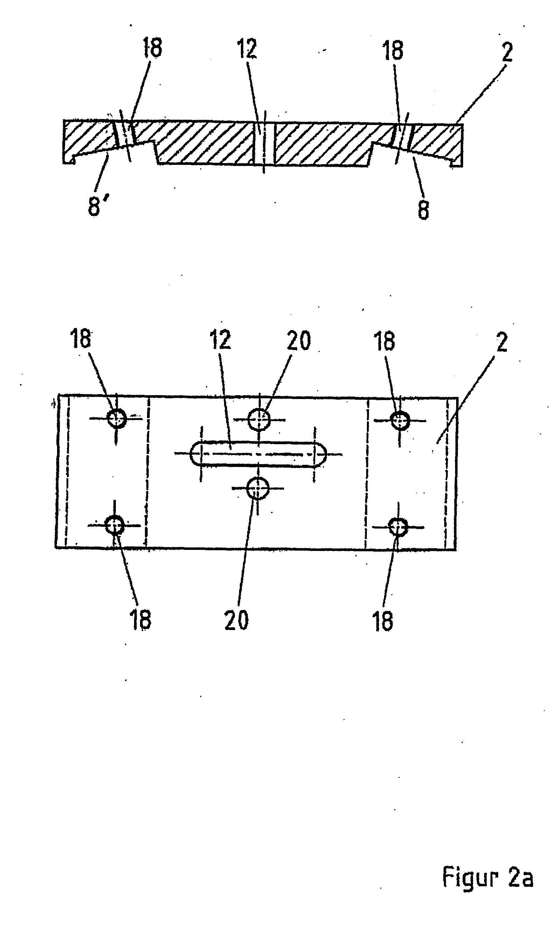

**Figur 1** zeigt in einer Seiten- und Draufsicht eine erfindungsgemäß ausgebildete, aus Baukastenmodulen aufgebaute Prüfeinheit 5 für die Längsfehlerprüfung an längsnahtgeschweißten Rohren mit zwei als Winkelprüfköpfe ausgebildeten Prüfköpfen 3, 3'. Die Prüfeinheit 5 besteht aus einem je nach Prüfaufgabe auswechselbaren standardisierten Verbindungselement 2, welches die Aufnehmer 4,4' über die in **Figur 2a** dargestellten endseitigen Ausnehmungen 8, 8' verbindet.

Über die Schrägstellung der Ausnehmungen 8, 8' im Verbindungselement 2 sowie dem Abstand dieser Ausnehmungen voneinander wird in einfacher Weise die Anpassung der Prüfköpfe 3, 3' an unterschiedliche Rohrgeometrien oder Prüfaufgaben vorgenommen, so dass über die definierte Positionierung der Prüfköpfe 3, 3' relativ zur Rohroberfläche der vorgesehene Einschallwinkel in das Rohr und die Erfassung des Echosignales immer reproduzierbar vorgegeben werden können.

Hierbei werden die Prüfköpfe 3,3' so in der Prüfeinheit angeordnet, dass bei in Prüfposition befindlicher Prüfeinheit diese mit der Prüfkopffläche auf der Rohroberfläche aufliegen, wodurch der Einschallwinkel bezogen auf die Rohroberfläche festgelegt ist.

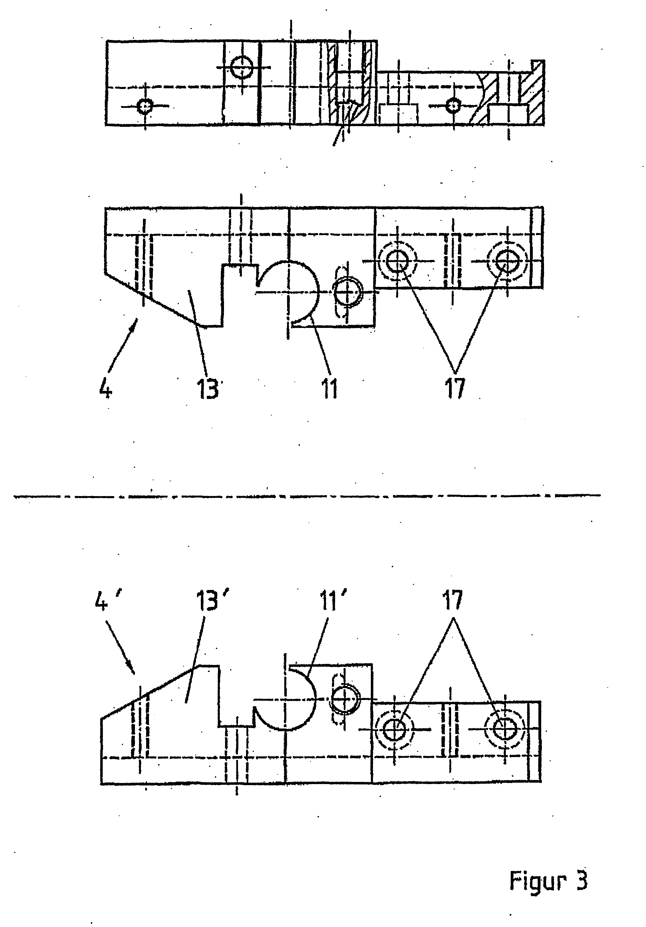

In **Figur 3** sind die Aufnehmer 4,4' für die Prüfköpfe 3,3' detailliert dargestellt. Die rechts- und linksseitig am Verbindungselement 2 angeordneten Aufnehmer 4,4' (siehe **Figur 1**) bestehen aus einer Grundplatte 13, 13', die mit einer Teilausnehmung 11, 11' zur formschlüssigen Aufnahme der in **Figur 1** dargestellten Prüfköpfe 3,3' versehen sind.

Über die Bohrungen 17 im Aufnehmer 4,4' sind diese mit einer Schraubverbindung 22 kraftschlüssig über Gewindebohrungen 18 mit dem Verbindungselement 2 verbunden (siehe auch **Figur 2a**).

Die Prüfköpfe 3, 3' sind wie aus **Figur 1** ersichtlich, in Tandemanordnung positioniert, wobei ein Prüfkopf 3, 3' als Sender und der andere Prüfkopf 3, 3' als Empfänger fungiert.

Zur Lagefixierung der Prüfköpfe 3, 3' in der Grundplatte 13,13` des Aufnehmers 4,4' ist an der Grundplatte 13, 13' ein Klemmelement 10,10' angeordnet, mit dem die Prüfköpfe 3,3' form- und kraftschlüssig in der Grundplatte 13, 13' fixiert werden können.

Das Klemmelement 10, 10' ist mit einer weiteren Teilausnehmung 14,14' versehen, um den Prüfkopf 3,3' gemeinsam mit der Grundplatte 13, 13' formschlüssig umgreifen zu können. Die kraftschlüssige Klemmung wird hier durch eine Schraubverbindung 15 realisiert, bei der der Prüfkopf 3, 3' in derTeilausnehmung 11, 11' der Grundplatte und der Teilausnehmung 14, 14' des Klemmelementes 10,10' verklemmt wird.

Die Zuführung der Koppelmittelflüssigkeit für die Prüfköpfe 3,3' geschieht über die an dem jeweiligen Aufnehmer 4, 4' angeordneten Koppelmittelanschlüsse 6, 6'.

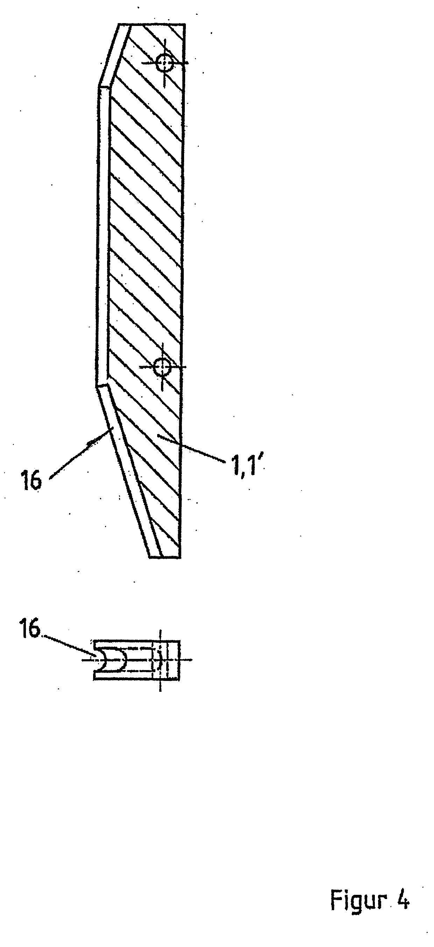

Zur Führung der Prüfeinheit auf der Rohroberfläche sind an den Außenseiten der Aufnehmer 4,4' Längsschienen 1,1` angeschraubt. Die Längsschiene 1, 1' ist in **Figur 4** näher dargestellt. Diese als Gleitkufe ausgebildete Schiene 1, 1' besitzt an der die Rohroberfläche berührenden Seite eine Nut 16, in die als Verschleißschutz 9 ein hier nicht dargestellter Hartmetallstab beispielsweise durch Löten eingesetzt werden kann.

Zur ortsfesten Positionierung an ein hier ebenfalls nicht dargestelltes ortsfestes Führungsgestell ist die Prüfeinheit 5 mit einer in **Figur 1** dargestellten Anschlusskupplung 7 verbunden. Die als Schnellkupplung ausgeführte Anschlusskupplung 7 ist zur exakten und reproduzierbaren Festlegung der Prüfposition an einem Lagerbock 25 in einem begrenzten Bereich quer zur Längsachse 26 der Prüfeinheit 5 schwenkbar gelagert.

Der Lagerbock 25 selbst ist form- und kraftschlüssig mit dem Verbindungselement 2 der Prüfeinheit 5 verbunden ist. Dazu weist das Verbindungselement 2 eine Nut 12 auf, in die eine am Lagerbock 25 angeordnete Nase 19 formschlüssig eingreift. Der Lagerbock 25 ist mit einer Schraubverbindung 21 über Bohrungen 20 mit dem Verbindungselement 2 kraftschlüssig verbunden.

Zur Realisierung der Schwenkbarkeit weist der Lagerbock 25 quer zur Längsachse 26 der Prüfeinheit 5 eine Schwenkachse 27 auf, an der die Anschlusskupplung 7 in einem begrenzten Bereich schwenk- und in der jeweiligen Position fixierbar gelagert ist. Dazu ist die Anschlusskupplung 7 am lagerbockseitigen Ende mit Schenkeln 28, 28' gabelförmig ausgebildet, wobei die Schenkel 28, 28' den Lagerbock 25 umgreifen und deren Enden eine Lagerstelle für die Schwenkachse 27 bilden. Über einen Spannhebel 29 kann in einfacher Weise über eine Verklemmung die jeweilige Schwenkposition der Prüfeinheit 5 relativ zur Anschlusskupplung 7 fixiert werden.

Zur Vereinfachung der Positionierung der Prüfeinheit auf der (gekrümmten) Rohroberfläche ist, wie ebenfalls in **Figur 1** dargestellt, die Prüfeinheit 5 in einem vorgegebenen Winkelbereich um die Längsachse 26 drehbar an der Anschlusskupplung 7 angeschlossen. Dazu ist die Anschlusskupplung 7 mit einer mit dem ortsfester Führungsgestell fest verbindbaren Anschlusshülse 30 versehen, in der ein mit dem Lagerbock 25 fest verbundener Zapfen 31 in einem vorgegebenen Winkelbereich dreh- und in der jeweiligen Position fixierbar angeordnet ist. Die Fixierung geschieht über einen weiteren, hier nicht dargestellten, Fixierhebel.

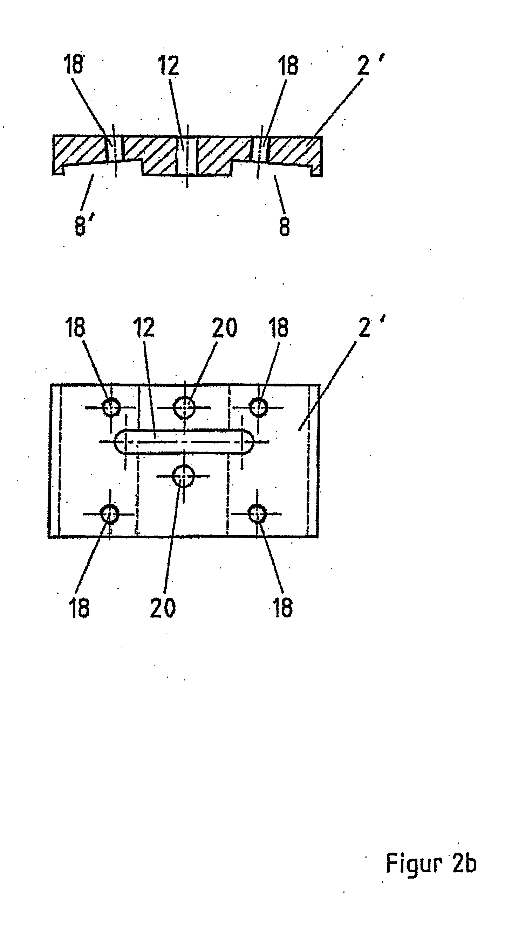

Zur Anpassung an unterschiedliche Prüfaufgaben oder Rohrgeometrien wind, wie in **Figur 2b** dargestellt, nur ein entsprechend ausgebildetes Verbindungselement 2' in die Prüfeinheit 5 eingesetzt, welches über die Neigung der Ausnehmungen 8, 8' abhängig vom jeweiligen Rohrdurchmesser, die Winkellage für die Prüfköpfe 3,3' vorgibt, so dass eine ordnungsgemäße Ankopplung an die Rohroberfläche gewährleistet ist. Im Vergleich zum Verbindungselement 2 in **Figur 2a**, ist beim Verbindungselement 2' die den Einschallwinkel des Prüfkopfes 3, 3' bestimmende Neigung der Ausnehmung 8, 8' sowie der Abstand der Ausnehmungen 8, 8' geändert.

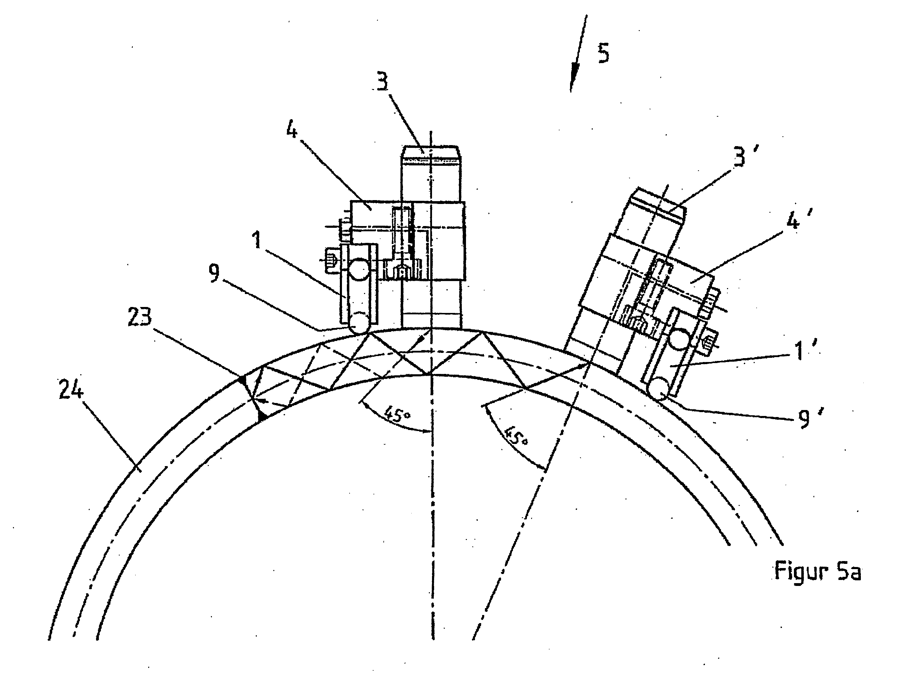

**Figur 5a** zeigt in einer Prinzipskizze die erfindungsgemäße Tandemanordnung der Prüfköpfe 3, 3' auf der Rohroberfläche für eine Rohrabmessung. Aus Gründen der Übersichtlichkeit ist die Prüfeinheit 5 nur mit den wesentlichen Elementen, Prüfköpfe 3, 3', Aufnehmer 4,4' und Längsschienen 1, 1' mit dem Verschleißschutz 9 dargestellt.

Wie in dieser Figur dargestellt, wird die Prüfung nur von einer Nahtseite aus durchgeführt. Eine weitere Verbesserung der Aussagesicherheit ergibt sich aber, wenn die Prüfung mit je einer Prüfeinheit von beiden Nahtseiten aus durchgeführt wird.

Der Abstand der Prüfköpfe 3, 3' zueinander sowie deren Winkellage in der Prüfeinheit wird über das hier nicht dargestellte Verbindungselement 2 festgelegt. Die Prüfköpfe 3, 3' sind auf der Rohroberfläche in der Weise positioniert, dass die Einschallung unter dem vorgesehen Winkel von 45° in die Rohroberfläche erfolgt. Mit diesem Einschallwinkel werden im Nahtmittenbereich etwaig vorhandene Längsfehler sicher detektiert.

Der Abstand der Prüfköpfe 3, 3' ist so aufeinander abgestimmt, dass das einschallende Signal den Nahtmittenbereich erfasst und das von einer eventuell vorhandenen Ungänze reflektierte Signal vom empfangenden Prüfkopf 3, 3' aufgenommen wird. Der Signalverlauf in der Rohrwand ist schematisch dargestellt.

Im vorlegenden Fall wird das Schallsignal vom Prüfkopf 3 ausgesendet, mehrfach an der Grenzfläche der Rohrwand reflektiert (gestrichelte Linie) und das von einem Fehler in der Schweißnaht 23 reflektierte Signal vom Prüfkopf 3' empfangen (durchgezogene Linie). Die Funktionen der Prüfköpfe können aber auch je nach Erfordernis getaucht werden.

Bei den bekannten Vorrichtungen zur Längsfehlerprüfung in längsnahtgeschweißten Rohren, mit einem gleichzeitig als Sender und Empfänger fungierenden Prüfkopf, würde ein reflektiertes Signal (hier idealisiert dargestellt) aus dem Nahtmittenbereich gar nicht oder bestenfalls Beugungsechos empfangen werden können, da der Prüfkopf außerhalb des Erfassungsbereichs für das reflektierte Signal liegt.

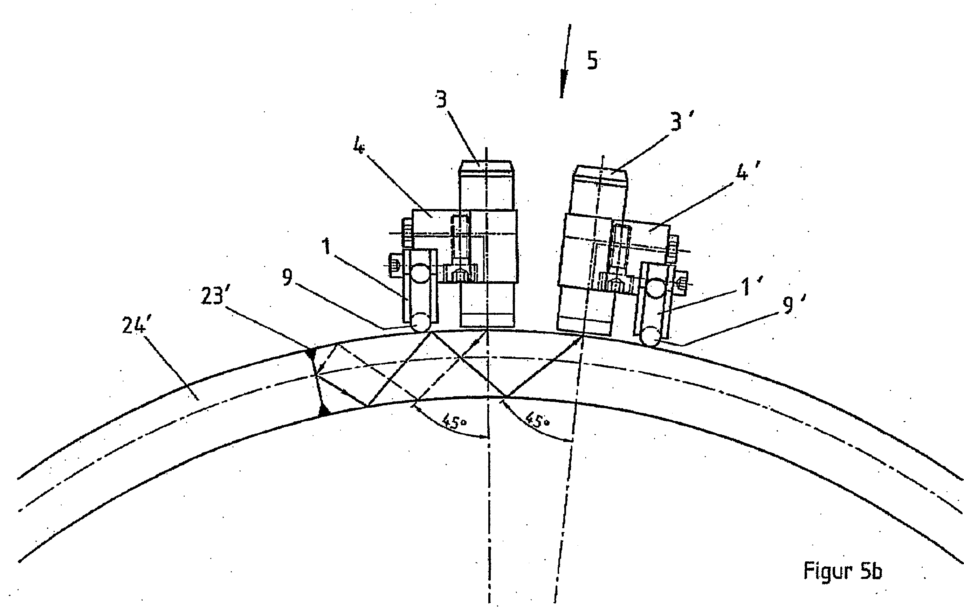

In **Figur 5b** ist eine Prüfeinheit 5 dargestellt, deren Prüfköpfe 3, 3' für eine dem vorgesehenen Einschallwinkel entsprechende Positionierung an einen größeren Rohrdurchmesser angepasst sind.

Des Rohr 24' hat einen größeren Durchmesser sowie eine größere Wanddicke als das Rohr 24 in **Figur 5a****.**

Um ebenfalls unter einem Einschallwinkel von 45° den Mittenbereich der Längsnaht 23' (hier z. B. bei 40% der Wanddicke) bei der Ultraschallprüfung zu erfassen, sind die Prüfköpfe 3, 3' in einer bezogen auf **Figur 5a** veränderten Position für Winkellage und Abstand innerhalb der Prüfeinheit 5 angeordnet, wobei die Position über das hier ebenfalls nicht dargestellte Verbindungselement 2' vorgegeben wird, das mit einer der Rohrkrümmung entsprechenden angewinkelten Ausnehmung 8, 8' versehen ist.

### Bezugszeichenliste

| **Nr.** | **Bezeichnung** |
|---|---|
| 1,1' | Längsschiene |
| 2, 2' | Verbindungselement |
| 3, 3' | Prüfkopf |
| 4, 4' | Aufnehmer |
| 5 | Prüfeinheit |
| 6, 6' | Koppelmittelanschluss |
| 7 | Anschlusskupplung |
| 8, 8' | Ausnehmungen |
| 9 | Verschleißschutz |
| 10, 10' | Klemmelement |
| 11, 11' | Teilausnehmung Grundplatte |
| 12 | Nut |
| 13, 13' | Grundplatte |
| 14, 14' | Teilausnehmung Klemmelement |
| 15 | Schraubverbindung |
| 16 | Nut |
| 17 | Bohrung |
| 18 | Gewindebohrung |
| 19 | Nase |
| 20 | Bohrung |
| 21 | Schraubverbindung |
| 22 | Schraubverbindung |
| 23, 23' | Längsschweißnaht |
| 24, 24' | Rohr |
| 25 | Lagerbock |
| 26 | Längsachse Prüfeinheit |
| 27 | Schwenkachse |
| 28, 28' | Schenkel |
| 29 | Spannhebel |
| 30 | Anschlusshülse |
| 31 | Zapfen |

## Patentansprüche

1. Vorrichtung zum Ultraschall-Prüfen der Schweißnaht längsnahtgeschweißter Rohre auf Längsfehler mit einer auf der Oberfläche des Rohres mindestens an einer Seite neben der Schweißnaht relativ verschiebbaren Prüfeinheit, bestehend aus einem mindestens einen die Rohroberfläche berührenden Prüfkopf mit Schwinger aufnehmenden Aufnehmer mit einer Koppelmittelzuführung, dessen Kanal im Bereich des Schwingers mündet, wobei der Prüfkopf in einer fest vorgegebenen Position zur Rohroberfläche anordenbar ist
**dadurch gekennzeichnet,**
**dass** die Prüfeinheit (5) mit zwei, je nach Prüfaufgabe und Rohrgeometrie, in ihrem Abstand zueinander veränderbaren Prüfköpfen (3, 3') in Tandemanordnung bestückt ist, wobei ein Prüfkopf (3, 3') als Sender und der andere Prüfkopf (3, 3') als Empfänger fungiert und die Position der Prüfköpfe (3, 3') relativ zur Rohroberfläche in der Weise in der Prüfeinheit (5) anpassbar ist, dass diese unabhängig vom Rohrdurchmesser immer in der dem vorgesehen Einschallwinkel relativ zur Rohroberfläche entsprechenden Position anordenbar sind.

2. Vorrichtung nach Anspruch 1
**dadurch gekennzeichnet,**
**dass** die Prufeinheit (5) aus standardisierten Baukastenmodulen, bestehend aus
- einem Verbindungselement (2, 2') und zwei damit verbindbaren, die Prüfköpfe (3, 3') aufnehmenden separaten Aufnehmern (4, 4'), mit je einem Koppelmittelanschluss (6, 6'),
- zwei, jeweils mit den Aufnehmern (4, 4') verbindbaren Längsschienen (1, 1'),
- einer mit der Prüfeinheit (5) verbindbaren Anschlusskupplung (7) zur ortsfesten Positionierung der Prüfeinheit in Prüfstellung an ein ortsfestes Führungsgestell aufgebaut ist,
wobei das Verbindungselement (2, 2'), die Winkellage und den Abstand der Prüfköpfe (3, 3') zueinander vorgebend, auswechselbar und entsprechend der Prüfaufgabe und Rohrgeometrie in einem Vorzugsmaßraster für Winkellage und Abstand der Prüfköpfe (3, 3') sortiert und zusammengestellt ist.

3. Vorrichtung nach Anspruch 2,
**dadurch gekennzeichnet,**
**dass** das Verbindungselement (2, 2') die Aufnehmer (4, 4') aufnehmende Ausnehmungen (8, 8') aufweist.

4. Vorrichtung nach Anspruch 3
**dadurch gekennzeichnet,**
**dass** die Ausnehmungen (8, 8') eine die Winkellage der Prüfköpfe (3, 3') vorgebende Neigung aufweisen.

5. Vorrichtung nach einem der Ansprüche 1 - 4
**dadurch gekennzeichnet,**
**dass** die Schienenelemente (1, 1') als Gleitkufen ausgebildet sind.

6. Vorrichtung nach Anspruch 5
**dadurch gekennzeichnet,**
**dass** die Gleitkufen an der die Rohroberfläche berührenden Kontaktfläche mit einem Verschleißschutz (9) versehen ist.

7. Vorrichtung nach Anspruch 6
**dadurch gekennzeichnet,**
**dass** der Verschleißschutz (9) aus Hartmetall besteht.

8. Vorrichtung nach Anspruch 6
**dadurch gekennzeichnet,**
**dass** der Verschleißschutz (9) aus Keramik besteht.

9. Vorrichtung nach einem der Ansprüche 1 - 8
**dadurch gekennzeichnet,**
**dass** der Aufnehmer (4, 4') aus einer mit einer Teilausnehmung (11, 11') zur formschlüssige Aufnahme des Prüfkopfes (3, 3') versehenen Grundplatte (13, 13') und einem damit verbindbaren mit einer weiteren Teilausnehmung 14, 14 versehenen Klemmelement (10, 10') besteht, welches den Prüfkopf (3, 3') ebenfalls formschlüssig umgreift.

10. Vorrichtung nach Anspruch 9
**dadurch gekennzeichnet,**
**dass** das Klemmelement (10, 10') mit der Grundplatte (13,13') verschraubbar ausgebildet ist.

11. Vorrichtung nach einem der Ansprüche 2 - 10
**dadurch gekennzeichnet,**
**dass** die Aufnehmer (4, 4') mit den Längsschienen (1, 1') verschraubbar ausgebildet sind.

12. Vorrichtung nach Anspruch 2
**dadurch gekennzeichnet,**
**dass** die Anschlusskupplung (7) als Schnellkupplung ausgebildet ist.

13. Vorrichtung nach einem der Ansprüche 2 -12
**dadurch gekennzeichnet,**
**dass** die Anschlusskupplung (7) mit einem Lagerbock (25) versehen ist, der form- und kraftschlüssig mit der Prüfeinheit (5) verbindbar ist.

14. Vorrichtung nach Anspruch 13
**dadurch gekennzeichnet,**
**dass** das Verbindungselement (2, 2') eine Nut (12) aufweist, in die der Lagerbock (25) mit einer Nase (19) formschlüssig eingreift.

15. Vorrichtung nach Anspruch 13 und 14
**dadurch gekennzeichnet,**
**dass** der Lagerbock (25) mit dem Verbindungselement (2, 2') verschraubbar ist.

16. Vorrichtung nach einem der Ansprüche 13 - 15
**dadurch gekennzeichnet,**
**dass** der Lagerbock (25) quer zur Längsachse (26) der Prüfeinheit (5) eine Schwenkachse (27) aufweist, an der die Anschlusskupplung (7) schwenkbar angeordnet ist.

17. Vorrichtung nach Anspruch 16
**dadurch gekennzeichnet**
**dass** die Anschlusskupplung (7) am lagerbockseitigen Ende gabelförmig mit Schenkeln (28, 28') ausgebildet ist, die den Lagerbock umgreifen und Lagerstellen für die Schwenkachse (27) bilden.

18. Vorrichtung nach einem der Anspruche 2 - 17
**dadurch gekennzeichnet,**
**dass** die Anschlusskupplung (7) mit einer mit dem ortsfesten Führungsgestell fest verbindbaren Anschlusshülse (30) versehen ist, in der ein mit dem Lagerbock (25) fest verbundener Zapfen (31) in einem vorgegebenen Winkelbereich dreh- und in der jeweiligen Position fixierbar angeordnet ist.

19. Vorrichtung nach einem der vorstehenden Ansprüche 1-18,
**dadurch gekennzeichnet,**
**dass** die Prüfköpfe Winkelprüfköpfe sind.

## Claims

1. A device for the ultrasonic inspection of the weld seam of pipes, welded along a longitudinal seam, for longitudinal defects, having an inspection unit displaceable in a relative manner on the surface of the pipe alongside at least one side of the weld seam, the inspection unit consisting of a receiving element, with coupling medium feed, which receives at least one inspection head, with transducer, in contact with the pipe surface, the channel of the coupling medium feed issuing in the region of the transducer, wherein the inspection head can be arranged in a definitely predetermined position in relation to the pipe surface, **characterised in that** the inspection unit (5) is fitted with two inspection heads (3, 3') in a tandem arrangement whose distance from one another can be altered depending on the inspection purpose and pipe geometry, wherein one inspection head (3, 3') acts as an emitter and the other inspection head (3, 3') as a receiver and the position of the inspection heads (3, 3') relative to the pipe surface can be adapted in the inspection unit (5) in such a manner that, irrespective of the pipe diameter, they can always be arranged in the position corresponding to the intended intromission angle relative to the pipe surface.

2. A device according to claim 1, **characterised in that** the inspection unit (5) is constructed of standardized building block modules consisting of
- a connecting element (2, 2') and two separate receiving elements (4, 4'), connectable to the latter and receiving the inspection heads (3, 3'), each with a coupling medium attachment (6, 6'),
- two longitudinal rails (1, 1') connectable to the respective receiving elements (4, 4'),
- an attachment coupling (7), connectable to the inspection unit (5), for fixed positioning of the inspection unit in the inspection position on a stationary guide frame,
wherein the connecting element (2, 2'), predetermining the angular position and the spacing of the inspection heads (3, 3') relative to one another, is exchangeable and, dependent on the inspection purpose and pipe geometry, is classified and assembled in a preferred dimensional grid for angular position and spacing of the inspection heads (3, 3').

3. A device according to claim 2, **characterised in that** the connecting element (2, 2') has cut outs (8, 8') receiving the receiving elements (4, 4').

4. A device according to claim 3, **characterised in that** the cut outs (8, 8') have an inclination predetermining the angular position of the inspection heads (3, 3').

5. A device according to any one of claims 1 - 4, **characterised in that** the rail elements (1, 1') are in the form of runners.

6. A device according to claim 5, **characterised in that** the runners are provided with wear protection (9) at the contact surface contacting the pipe surface.

7. A device according to claim 6, **characterised in that** the wear protection (9) is composed of hard metal.

8. A device according to claim 6, **characterised in that** the wear protection (9) is composed of ceramic.

9. A device according to any one of claims 1 - 8, **characterised in that** the receiving element (4, 4') is composed of a base plate (13, 13'), provided with a partial cut-out (11, 11') to receive the inspection head (3, 3') in a positive-locking manner, and a clamping element (10, 10') connectable to the base plate (13, 13') and provided with another partial cut-out (14, 14'), which clamping element (10, 10') engages around the inspection head (3, 3') likewise in a positive-locking manner.

10. A device according to claim 9, **characterised in that** the clamping element (10, 10') can be screwed to the base plate (13, 13').

11. A device according to any one of claims 2 - 10, **characterised in that** the receiving elements (4, 4') can be screwed to the longitudinal rails (1, 1').

12. A device according to claim 2, **characterised in that** the attachment coupling (7) is in the form of a quick-action coupling.

13. A device according to any one of claims 2 - 12, **characterised in that** the attachment coupling (7) is provided with a bearing mounting (25) connectable to the inspection unit (5) in a positive-locking and friction-locking manner.

14. A device according to claim 13, **characterised in that** the connecting element (2, 2') has a slot (12) in which the bearing mounting (25) engages in a positive-locking manner by means of a projection (19).

15. A device according to claim 13 and 14, **characterised in that** the bearing mounting (25) can be screwed to the connecting element (2, 2').

16. A device according to any one of claims 13 - 15, **characterised in that** the bearing mounting (25) has a pivot axis (27) transverse to the longitudinal axis (26) of the inspection unit (5), the attachment coupling (7) being pivotably arranged about this pivot axis (27).

17. A device according to claim 16, **characterised in that** at the end closest to the bearing mounting, the attachment coupling (7) is fork-shaped with limbs (28, 28') which engage around the bearing mounting and form bearing points for the pivot axis (27).

18. A device according to any one of claims 2 - 17, **characterised in that** the attachment coupling (7) is provided with an attachment sleeve (30) securely connectable to the stationary guide frame, a pin (31), securely connected to the bearing mounting (25), being arranged in this sleeve (30) so as to be rotatable in a predetermined angular range and fixable in the specific position.

19. A device according to any one of the preceding claims 1-18, **characterised in that** the inspection heads are angle inspection heads.

## Revendications

1. Dispositif pour contrôler par ultrasons la présence de défauts longitudinaux sur le cordon de soudure de tubes à soudure longitudinale au moyen d'une unité de contrôle mobile sur la surface du tube, au moins sur un côté adjacent au cordon de soudure, comprenant un logement recevant au moins une tête de contrôle touchant la surface du tube et dotée d'un transducteur, ce logement comportant une amenée de milieu de couplage dont le conduit débouche dans la zone du transducteur, la tête de contrôle étant montée en une position prédéfinie par rapport à la surface du tube,
**caractérisé en ce que** l'unité de contrôle (5) est équipée de deux têtes de contrôle (3, 3') disposées en tandem, leur écartement mutuel pouvant être modifié en fonction du contrôle à effectuer et de la géométrie du tube, une tête de contrôle (3, 3') servant d'émetteur et l'autre tête de contrôle (3, 3') de récepteur, et la position des têtes de contrôle (3, 3') pouvant être adaptée par rapport à la surface du tube dans l'unité de contrôle (5) de sorte qu'elles se trouvent toujours dans la position appropriée par rapport à la surface du tube et en fonction de l'angle d'incidence des ultrasons prévu, et ce indépendamment du diamètre du tube.

2. Dispositif selon la revendication 1,
**caractérisé en ce que** l'unité de contrôle (5) est constituée de modules standard, composés :
- d'un élément de liaison (2, 2') et de deux logements (4, 4') séparés recevant les têtes de contrôle (3, 3') pouvant être reliés à l'élément de liaison, chaque logement étant doté d'un raccord pour milieu de couplage (6, 6'),
- de deux rails longitudinaux (1, 1') pouvant être reliés aux logements (4, 4'),
- d'un dispositif de raccordement (7) pouvant être raccordé à l'unité de contrôle (5) destiné à positionner fixement l'unité de contrôle en position de contrôle sur un support de guidage fixe,
dans lequel l'élément de liaison (2, 2') détermine la position angulaire et l'écartement entre les têtes de contrôle (3, 3'), est amovible et est calibré et assemblé en fonction du contrôle à effectuer et de la géométrie du tube dans une plage de dimensions préférentielles pour la position angulaire et l'écartement entre les têtes de contrôle (3, 3').

3. Dispositif selon la revendication 2,
**caractérisé en ce que** l'élément de liaison (2, 2') présente des évidements (8, 8') recevant les logements (4, 4').

4. Dispositif selon la revendication 3,
**caractérisé en ce que** les évidements (8, 8') présentent une inclinaison déterminant la position angulaire des têtes de contrôle (3, 3').

5. Dispositif selon l'une des revendications 1 à 4,
**caractérisé en ce que** les éléments formant rails (1, 1') sont réalisés sous la forme de patins de glissement.

6. Dispositif selon la revendication 5,
**caractérisé en ce que** les patins de glissement sont pourvus sur la surface de contact touchant la surface du tube d'une protection anti-usure (9).

7. Dispositif selon la revendication 6,
**caractérisé en ce que** la protection anti-usure (9) est en métal dur.

8. Dispositif selon la revendication 6,
**caractérisé en ce que** la protection anti-usure (9) est en céramique.

9. Dispositif selon l'une des revendications 1 à 8,
**caractérisé en ce que** le logement (4, 4') est constitué d'une plaque de base (13, 13') dans laquelle a été ménagé un évidement partiel (11, 11') afin que la tête de contrôle (3, 3') puisse venir s'y loger par correspondance de forme, et d'un élément de serrage (10, 10') doté d'un autre évidement partiel (14, 14') pouvant être relié à la plaque de base, lequel élément de serrage venant en prise avec la tête de contrôle (3, 3') également par correspondance de forme.

10. Dispositif selon la revendication 9,
**caractérisé en ce que** l'élément de serrage (10, 10') est réalisé de façon à pouvoir être vissé avec la plaque de base (13, 13').

11. Dispositif selon l'une des revendications 2 à 10,
**caractérisé en ce que** les logements (4, 4') sont réalisés de façon à pouvoir être vissés avec les rails longitudinaux (1, 1').

12. Dispositif selon la revendication 2,
**caractérisé en ce que** le dispositif de raccordement (7) est réalisé sous la forme d'un raccord rapide.

13. Dispositif selon l'une des revendications 2 à 12,
**caractérisé en ce que** le dispositif de raccordement (7) est muni d'un support de palier (25) pouvant être relié par correspondance de forme et par friction à l'unité de contrôle (5).

14. Dispositif selon la revendication 13,
**caractérisé en ce que** l'élément de liaison (2, 2') présente une rainure (12)
dans laquelle s'engage le support de palier (25) par correspondance de forme à l'aide d'un tenon (19).

15. Dispositif selon les revendications 13 et 14,
**caractérisé en ce que** le support de palier (25) peut être vissé à l'élément de liaison (2, 2').

16. Dispositif selon l'une des revendications 13 à 15,
**caractérisé en ce que** le support de palier (25) présente transversalement à l'axe longitudinal (26) de l'unité de contrôle (5) un axe de pivotement (27), sur lequel est agencé de façon à pouvoir pivoter le dispositif de raccordement (7).

17. Dispositif selon la revendication 16,
**caractérisé en ce que** le dispositif de raccordement (7) est réalisé, au niveau de l'extrémité côté support de palier, sous la forme d'une fourche avec des branches (28, 28') qui viennent en prise dans le support de palier et forment des points d'appui pour l'axe de pivotement (27).

18. Dispositif selon l'une des revendications 2 à 17,
**caractérisé en ce que** le dispositif de raccordement (7) est doté d'un manchon de raccord (30) pouvant être relié fixement au support de guidage fixe et dans lequel il est agencé un tourillon (31) relié fixement au support de palier (25), lequel tourillon pouvant pivoter dans une zone angulaire prédéterminée et pouvant être fixé dans la position en question.

19. Dispositif selon l'une des revendications 1 à 18,
**caractérisé en ce que** les têtes de contrôle sont des têtes de contrôle angulaires.
